# EUROPÄISCHE PATENTSCHRIFT

(11) **EP 3 077 710 B1**
(45) Veröffentlichungstag und Bekanntmachung des Hinweises auf die Patenterteilung: **21.08.2019**
(21) Anmeldenummer: 14812418.3
(22) Anmeldetag: 02.12.2014
(51) Int. Cl.: F16J 15/26

(54) **DICHTUNGSANORDNUNG UND VERFAHREN ZUM BETRIEB DERSELBEN**
SEAL ARRANGEMENT
AGENCEMENT D'ÉTANCHÉIFICATION

(30) Priorität: 02.12.2013 EP 13195239
(43) Veröffentlichungstag der Anmeldung: 12.10.2016
(73) Patentinhaber: Burckhardt Compression AG, 8404 Winterthur (CH)
(72) Erfinder: DE LAPERSONNE, Pascal, CH-8405 Winterthur (CH); FEISTEL, Norbert, CH-8548 Ellikon a.d. Thur (CH); VOSER, Alexandre, CH-8352 Elsau (CH)
(74) Vertreter: Dr. Graf & Partner AG
(86) Internationale Anmeldenummer: PCT/EP2014/076304
(87) Internationale Veröffentlichungsnummer: WO 2015/082497

(56) Entgegenhaltungen:
- AT-A4- 508 782
- GB-A- 141 821
- US-A- 5 161 804

## Beschreibung

### Beschreibung

Die Erfindung betrifft eine Dichtungsanordnung zum Abdichten einer in axialer Richtung verlaufenden und in axialer Richtung hin und her beweglichen Kolbenstange eines Kolbenkompressors. Die Erfindung betrifft zudem ein Verfahren zum Betrieb der Dichtungsanordnung.

### Stand der Technik

Kolbenkompressoren sind Arbeitsmaschinen, die zur Förderung beziehungsweise zur Verdichtung von Gasen bis zu beliebig hohen Drücken eingesetzt werden. Solche Kolbenkompressoren arbeiten nach dem Verdrängerprinzip, das heisst der Verdichtungsraum schliesst nach dem Ansaugen des Gases vollständig. Unter Krafteinwirkung wird das Volumen in einem Zylinder verkleinert und das Gas verdichtet. Ein derartiger Kolbenkompressor, auch als Kreuzkopfkolbenkompressor bezeichnet, umfasst eine linear hin und her bewegliche Kolbenstange, die einerseits mit einem Kolben und andererseits mit einem Kreuzkopf beziehungsweise einem Kurbelantrieb verbunden ist. Um den hohen Druckunterschied zwischen Kolben und Kurbelantrieb abzudichten ist entlang der Kolbenstange eine Druckpackung mit Kammerscheiben angeordnet. Eine derartige Druckpackung umfasst zumindest einen Packungsring, ausgestaltet als ein Dichtring oder ein Abstreifring. Üblicherweise umfasst eine derartige Druckpackung zur Kurbelantriebseite hin zumindest einen Abstreifring, um auf der Kolbenstange anhaftendes Öl, wie zum Beispiel Schmieröl aus dem Kurbelantrieb, abzustreifen.

Die Druckschrift AT 512 609 offenbart eine Druckpackung mit Kammerscheiben, wobei jede Kammerscheibe eine Packungskammer ausbildet, und wobei in zumindest einer der Packungskammern zumindest ein als Abstreifring beziehungsweise als Dichtring ausgestalteter Packungsring angeordnet ist, der dazu dient auf der Kolbenstange anhaftendes Öl abzustreifen. Der Packungsring ist über ein Federelement in axialer Richtung vorgespannt, um die Ausbildung eines Leckagepfades zwischen dem Packungsring und einer Begrenzungsfläche der Kammerscheibe zu verhindern. Die in der Druckschrift AT 512 609 offenbarte Anordnung eines Packungsrings in Kombination mit einem Federelement weist den Nachteil auf, dass der Packungsring bei jedem Hub der Kolbenstange ein axiales Spiel aufweist, sodass zwischen dem Packungsring und der Begrenzungsfläche der Kammerscheibe, an welcher der Packungsring zeitweise anliegt, ein radialer Spalt geöffnet wird, durch welchen Öl ungehindert aus dem Kurbelkasten oder dem Getriebe in die Packungskammer gelangen kann. Zudem unterliegt der Abstreifring einem höheren Verschleiss, sodass dieser in kürzeren Wartungsintervallen zu ersetzen ist.

Die Druckschrift AT 508 782 A4 offenbart eine Anordnung von zwei Packungsringen in Kombination mit einem Federelement. Diese Anordnung weist den Nachteil auf, dass, bedingt durch das axiale Spiel der Packungsringe, sich zwischen den beiden Packungsringen und/oder zwischen dem Packungsring und der Begrenzungsfläche der Kammerscheibe ein radialer Spalt öffnen kann, durch welchen Öl ungehindert von der Kolbenstange beziehungsweise vom Kurbelkasten in die Packungskammer gelangen kann. Zudem unterliegt der Packungsring einem höheren Verschleiss, sodass dieser in kürzeren Wartungsintervallen zu ersetzen ist.

Die Druckschrift US 5,558,341 offenbart eine Dichtungsvorrichtung für ein inkompressibles Fluid. Diese Dichtungsvorrichtung ist zum Abdichten einer rotierenden Welle geeignet. Eine derartige Dichtungsvorrichtung ist jedoch nicht geeignet zum Abdichten einer Welle, die in axialer Richtung eine Hubbewegung ausführt.

### Darstellung der Erfindung

Aufgabe der Erfindung ist es eine vorteilhaftere Dichtungsanordnung auszubilden, welche weniger zur Ausbildung eines radialen Spaltes neigt, und welche zudem einen geringeren Verschleiss aufweist.

Diese Aufgabe wird gelöst mit einer Dichtungsanordnung umfassend die Merkmale von Anspruch 1. Die abhängigen Ansprüche 2 bis 12 betreffend weitere, vorteilhafte Ausgestaltungen. Die Aufgabe wird weiter gelöst mit einem Verfahren zum Betrieb einer Dichtungsanordnung aufweisend die Merkmale von Anspruch 13. Die abhängigen Ansprüche 14 und 15 betreffen weitere, vorteilhafte Verfahrensschritte.

Die Aufgabe wird insbesondere gelöst mit einer Dichtungsanordnung zum Abdichten einer in axialer Richtung verlaufenden und in axialer Richtung hin und her beweglichen Kolbenstange eines Kolbenkompressors, umfassend zumindest eine Packungskammer, wobei die Packungskammer in axialer Richtung von einer ersten und einer zweiten Seitenwand begrenzt ist, wobei in der Packungskammer zumindest ein als ein Dichtring oder als ein Abstreifring ausgestalteter Packungsring sowie eine Federvorrichtung angeordnet sind, und wobei ausgehend von der ersten Seitenwand in axialer Richtung nacheinander folgend eine Federvorrichtung und zumindest ein Packungsring angeordnet ist, wobei der Packungsring an der zweiten Seitenwand anliegt, und wobei die Federvorrichtung als Magnetfeder ausgestaltet ist und aus zwei in axialer Richtung beabstandeten Baugruppen, einer ersten Baugruppe und einer zweiten Baugruppe besteht, wobei jede Baugruppe zumindest ein Magnet umfasst, und wobei die Magnete derart gegenseitig angepasst in den beiden Baugruppen angeordnet sind, dass die beiden Baugruppen sich gegenseitig abstossen.

Die Aufgabe wird weiter insbesondere gelöst mit einem Verfahren zum Betrieb einer Dichtungsanordnung zum Abdichten einer in axialer Richtung verlaufenden und in axialer Richtung hin und her beweglichen Kolbenstange eines Kolbenkompressors, wobei die Dichtungsanordnung zumindest eine Packungskammer umfasst, und wobei in der Packungskammer in axialer Richtung nacheinander folgend eine magnetische Federvorrichtung umfassend ein Elektromagnet und zumindest ein Packungsring angeordnet sind, wobei eine Zustandsgrösse des Kolbenkompressors gemessen wird und wobei der Elektromagnet in Abhängigkeit der Zustandsgrösse angesteuert wird, um die von der magnetischen Federvorrichtung auf den Packungsring bewirkte Federkraft in Abhängigkeit der Zustandsgrösse zu verändern.

Es hat sich gezeigt, dass das axiale Spiel, beziehungsweise der radiale Spalt, welcher sich zwischen dem Packungsring und der Begrenzungsfläche der Kammerscheibe oder zwischen zwei nebeneinander angeordneten Packungsringen ausbildet, durch eine Erhöhung der Federkraft reduziert werden kann. Eine Erhöhung der Federkraft hat jedoch zur Folge hat, dass die Bewegung der Packungsringe in radialer Richtung, das heisst radial zur Verlaufsrichtung der Kolbenstange, vermindert oder verhindert wird, wenn die gegenseitige Anpresskraft zwischen dem Packungsring und der Begrenzungsfläche der Kammerscheibe oder zwischen zwei Packungsringen zu gross ist. Dies hat zur Folge, dass die Packungsringe bezüglich der Kolbenstange in einer exzentrischen Lage gehalten werden, was einen erhöhten Verschleiss der Packungsringe und auch ein erhöhte Leckage der Packungsringe zur Folge hat. Die Verwendung einer Magnetfeder ergibt den Vorteil, dass diese eine nichtlineare Federcharakteristik aufweist. Die Federkraft der Magnetfeder wird vorteilhafterweise derart gewählt, dass eine Bewegung der Packungsringe in radial Richtung möglich ist, und dass die Federkraft nichtlinear, das heisst überproportional ansteigt, wenn zwischen dem Packungsring und der Begrenzungsfläche der Kammerscheibe oder zwischen zwei Packungsringen ein axiales Spiel beziehungsweise eine Verschiebung in axialer Richtung auftritt. Diese nichtlineare Federcharakteristik hat zur Folge, dass das axiale Spiel reduziert oder verhindert wird, wogegen eine Bewegung der Packungsringe in radialer Richtung zumindest teilweise möglich ist. Die erfindungsgemässe Dichtungsanordnung weist deshalb den Vorteil auf, dass diese weniger zur Ausbildung eines radialen Spaltes neigt, und dass die Packungsringe einen geringeren Verschleiss beziehungsweise eine höhere Dichtigkeit aufweisen. Die Magnetfeder hat zudem den Vorteil auf, dass diese einen geringen Verschleiss aufweist.

In einer besonders vorteilhaften Ausführungsform sind die Magnete als Permanentmagnete ausgestaltet. Diese Ausführungsform weist den Vorteil auf, dass die Federvorrichtung besonders kostengünstig und zuverlässig ausgestaltet werden kann. In einer weiteren vorteilhaften Ausführungsform sind die Magnete beider Baugruppen als Elektromagnete ausgestaltet. In einer weiteren möglichen Ausführungsform ist der Magnet der einen Baugruppe als Permanentmagnet und der Magnet der anderen Baugruppe als Elektromagnet ausgestaltet. Die Ausführungsform der Federvorrichtung umfassend zumindest einen Elektromagneten weist den Vorteil auf, dass die von der Federvorrichtung bewirkte Federkraft ansteuerbar ist, durch eine entsprechende Magnetisierung des Elektromagneten. Die in der Dichtungsanordnung erforderliche Federkraft hängt insbesondere von der Drehzahl beziehungsweise der Hubfrequenz des Kolbenkompressors ab. In einer vorteilhaften Ausgestaltung ist somit eine Regelungsvorrichtung vorgesehen, welche die Federkraft in Abhängigkeit der Drehzahl des Kolbenkompressors regelt.

Die erfindungsgemässe Dichtungsanordnung weist unter anderem den Vorteil auf, dass die Federvorrichtung keinen Verschleiss aufweist. Somit tritt auch keine Abnutzung auf und die Federvorrichtung muss nicht oder kaum ersetzt werden. Dies reduziert die Wartungskosten und erhöht die Zuverlässigkeit der Dichtungsanordnung. Die als Magnetfeder ausgestaltete Federvorrichtung weist zudem dem Vorteil auf, dass die Magnetfeder eine nichtlineare Kraft-Weg-Kennlinie aufweist. Das heisst die Abstossungskraft von zwei beabstandeten Baugruppen der Magnetfeder nimmt mit abnehmender Distanz sehr rasch, das heisst nichtlinear zu. Schon eine kleine Distanzverringerung des Luftspaltes von beispielsweise einem halben Millimeter kann die Abstossungskraft unter Umständen um die Hälfte erhöhen. Diese Federcharakteristik der Magnetfeder hat zur Folge, dass ein Dichtring oder ein Abstreifring, der seine vorgesehene Position auf Grund des axialen Spiels durch ein Verschieben in axialer Richtung verlassen hat, sehr schnell wieder in die richtige, ursprüngliche Position gebracht wird, sodass der zur Seitenwand hin angeordnete Dichtring oder der Abstreifring sehr schnell wieder an der zweiten Seitenwand anliegt. Dies hat zur Folge, dass der Verschleiss des Dichtrings oder des Abstreifrings und die Leckage des Dichtrings oder Abstreifrings reduziert werden, da diese vorwiegend in der für sie vorgesehenen Position gehalten werden. Dies reduziert ebenfalls die Wartungskosten und erhöht die Zuverlässigkeit der Dichtungsanordnung.

### Kurze Beschreibung der Zeichnungen

Die zur Erläuterung der Ausführungsbeispiele verwendeten Zeichnungen zeigen:
- Fig. 1: einen Längsschnitt durch ein erstes Ausführungsbeispiel einer Dichtungsanordnung;
- Fig. 2: einen Längsschnitt durch ein zweites Ausführungsbeispiel einer Dichtungsanordnung;
- Fig. 3: einen Längsschnitt durch ein drittes Ausführungsbeispiel einer Dichtungsanordnung;
- Fig. 4: einen Längsschnitt durch ein viertes Ausführungsbeispiel einer Dichtungsanordnung;
- Fig. 5: eine perspektivische Ansicht zweier Permanentmagnete;
- Fig. 6: eine perspektivische Ansicht zweier weiterer Permanentmagnete;
- Fig. 7: eine Draufsicht auf eine Baugruppe umfassend einen Magnetträger;
- Fig. 8: eine perspektivische Ansicht zweier Baugruppen;
- Fig. 9: eine Draufsicht auf ein weiteres Ausführungsbeispiel einer Baugruppe;
- Fig. 10: einen Längsschnitt durch ein fünftes Ausführungsbeispiel einer Dichtungsanordnung;
- Fig. 11: eine perspektivische Ansicht eines Dichtrings;
- Fig. 12: eine Federcharakteristik .

Grundsätzlich sind in den Zeichnungen gleiche Teile mit gleichen Bezugszeichen versehen.

### Wege zur Ausführung der Erfindung

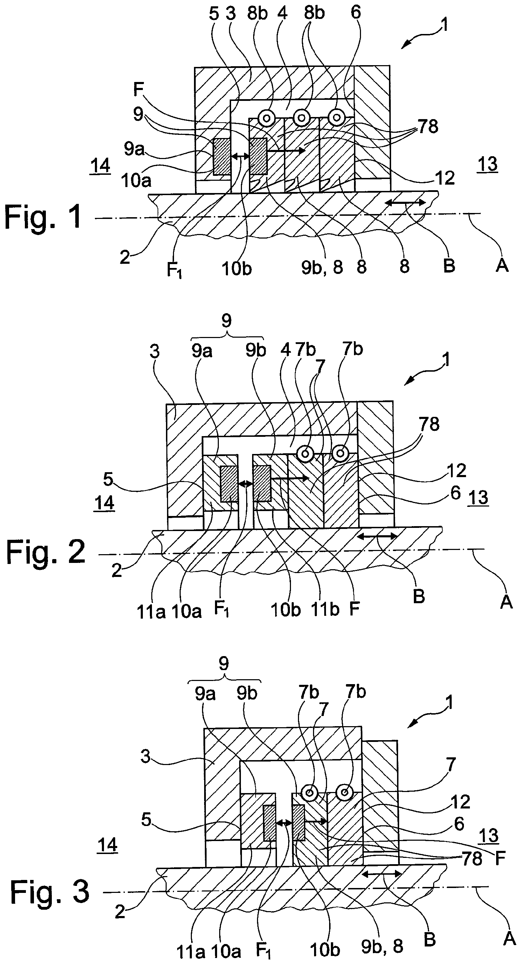

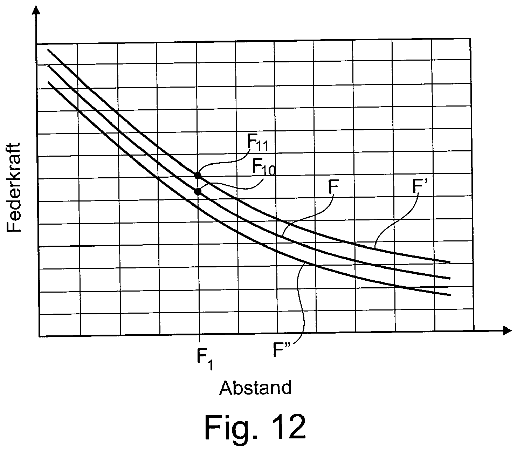

Die Figuren 1 bis 4 sowie Figur 10 zeigen je einen Längsschnitt unterschiedlicher Dichtungsanordnungen 1 zum Abdichten einer in axialer Richtung A verlaufenden, in Bewegungsrichtung B beweglich gelagerten Kolbenstange 2 eines Kolbenkompressors. Die Dichtungsanordnung 1 umfasst eine Kammerscheibe 3 beziehungsweise ein Packungsgehäuse 3, welche eine Packungskammer 4 beziehungsweise eine Ausnehmung ausbildet, wobei die Packungskammer 4 in axialer Richtung A von einer ersten und einer zweiten Seitenwand 5, 6 begrenzt ist. Die erste Seitenwand 5 ist näher zum Zylinderraum 14 hin angeordnet, wogegen die zweite Seitenwand 6 näher zum Kurbelkasten 13 beziehungsweise zum Getriebe hin angeordnet ist. In der Packungskammer 4 ist eine Federvorrichtung 9 angeordnet und zusätzlich entweder zumindest ein Packungsring, ausgestaltet als ein Abstreifring 8, wie in Figur 1 dargestellt, oder ausgestaltet als ein Dichtring 7, wie in den Figuren 2 bis 4 oder 10 dargestellt. Der Abstreifring 8 dient insbesondere dazu an der Oberfläche der Kolbenstange 2 angelagertes Öl abzustreifen. Der Dichtring 8 dient insbesondere dazu vorhandenen Gasnebel abzudichten und/oder abzustreifen. Ausgehend von der ersten Seitenwand 5 ist in axialer Richtung A nacheinander folgend zuerst die Federvorrichtung 9 und nachfolgend zumindest ein Abstreifring 8 oder ein Dichtring 7 angeordnet, wobei der Dichtring 7 oder der Abstreifring 8 an der zweiten Seitenwand 6 anliegt. Die Federvorrichtung 9 ist als Magnetfeder ausgestaltet und besteht aus zwei in axialer Richtung A beabstandet angeordneten Baugruppen 9a, 9b, einer ersten Baugruppe 9a und einer zweiten Baugruppe 9b, wobei jede Baugruppe 9a, 9b zumindest ein Magnet 10a, 10b umfasst, und wobei die Magnete 10a, 10b derart gegenseitig angepasst in den beiden Baugruppen 9a, 9b angeordnet sind, dass die beiden Baugruppen 9a, 9b sich gegenseitig abstossen, indem zwischen den beiden um die Distanz F1 gegenseitig beabstandeten Magneten 10a, 10b eine gegenseitig abstossende Kraft F wirkt, sodass auf den Abstreifring 8 beziehungsweise den Dichtring 7 eine Federkraft F wirkt. Figur 12 zeigt beispielhaft den Zusammenhang der Federkraft F in Funktion der Distanz F1 einer wie in den Figuren 1 bis 4 oder 10 dargestellten Federvorrichtung 9.

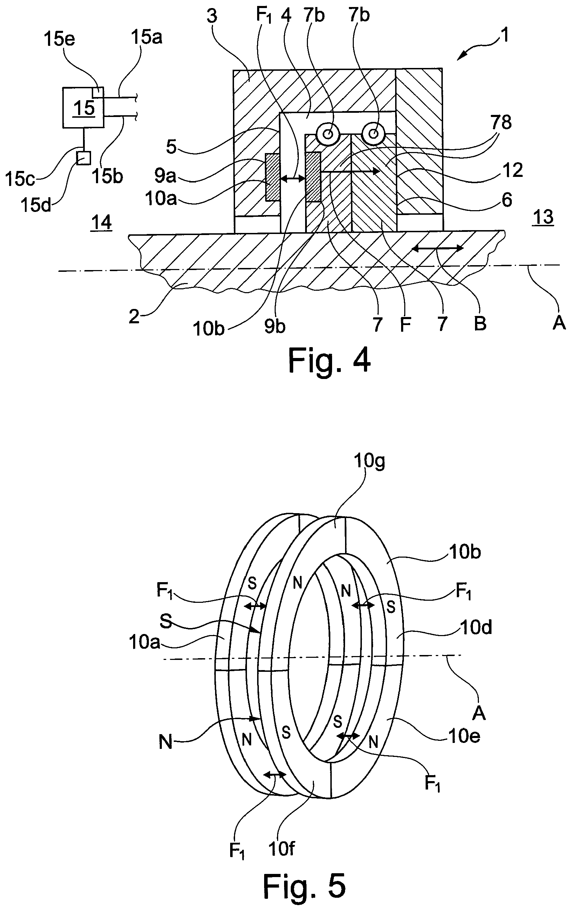

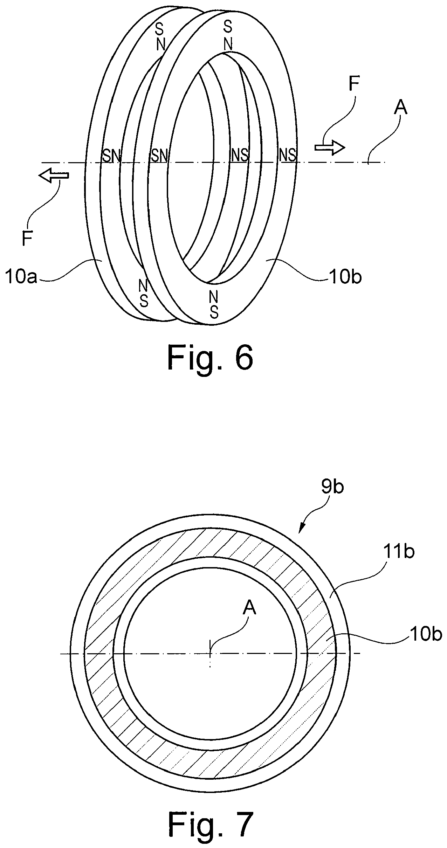

In einer bevorzugten Ausgestaltung sind die Magnete 10a, 10b wie in den Figuren 5 und 6 dargestellt als Permanentmagnete ausgestaltet, wobei die Polarisierung der Permanentmagnete mit N und S bezeichnet ist. Figur 5 zeigt zwei kreisförmig verlaufende Permanentmagnete 10a, 10b, mit vier in Umfangsrichtung verteilt angeordneten Teilpermanentmagneten 10d, 10e, 10f, 10g, wobei die Polarisierung der Magnete in Verlaufsrichtung der Achse A verläuft, und wobei jeweils zwei in Umfangsrichtung benachbart angeordnete Teilpermanentmagnete 10d, 10e, 10f, 10g eine entgegengesetzte Polarisierung aufweisen, wie in Umfangsrichtung mit der Polarisierung N-S-N-S dargestellt. Die Teilpermanentmagnete 10d, 10e, 10f, 10g sind derart gegenseitig angepasst in den Magneten 10a, 10b angeordnet, dass sich die Magnete 10a, 10b in axialer Richtung A gegenseitig abstossen, weil die Stirnseiten der gegenüberliegenden Teilpermanentmagnete 10d, 10e, 10f, 10g in axialer Richtung A dieselbe Polarisierung N-N oder S-S aufweisen.

Figur 6 zeigt zwei kreisförmig verlaufende Permanentmagnete 10a, 10b, die vorzugsweise aus je einem Stück bestehen, wobei die Polarisierung der Magnete 10a, 10b in radialer Richtung verläuft, das heisst radial zur Achse A. Die Permanentmagnete 10a, 10b sind derart gegenseitig angepasst angeordnet, dass sich die Magnete 10a, 10b in axialer Richtung A gegenseitig abstossen.

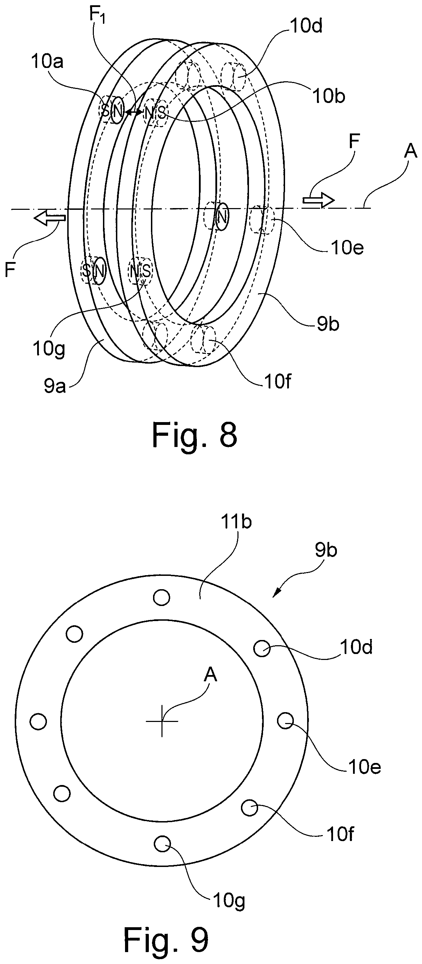

Figur 8 zeigt zwei kreisförmig verlaufende Baugruppen 9a, 9b, eine erste Baugruppe 9a und eine zweite Baugruppe 9b, in welchen Teilpermanentmagnete 10d, 10e, 10f, 10g in Umfangsrichtung gegenseitig beabstandet angeordnet sind, wobei die Teilpermanentmagnete 10d, 10e, 10f, 10g in Verlaufsrichtung der Achse A polarisiert sind. Jeweils zwei in Umfangsrichtung benachbart angeordnete Teilpermanentmagnete 10d, 10e, 10f, 10g weisen eine entgegengesetzte Polarisierung auf. Die Teilpermanentmagnete 10d, 10e, 10f, 10g sind derart gegenseitig angepasst in der ersten beziehungsweise zweiten Baugruppe 9a, 9b angeordnet, dass sich die Magnete 10a, 10b beziehungsweise die Baugruppen 9a, 9b in axialer Richtung A gegenseitig abstossen.

Figur 9 zeigt in einer Draufsicht ein weiteres Ausführungsbeispiel einer möglichen Baugruppe 9b aufweisend einen ringförmigen Magnetträger 11b mit acht in Umfangsrichtung gegenseitig beabstandet angeordneten Teilpermanentmagneten 10d, 10e, 10f, 10g, von welchen vier mit Bezugszeichen versehen sind.

Solche in den Figuren 5, 6, 8 und 9 dargestellten Baugruppen 9a, 9b können wie in den Figuren 1 bis 4 oder 10 dargestellt auf unterschiedliche Weise in der Dichtungsanordnung 1 angeordnet sein. Eine derartige Anordnung könnte beispielsweise die in Figur 12 dargestellte Federcharakteristik aufweisen.

Die in Figur 1 dargestellte Dichtungsanordnung 1 umfasst drei in axialer Richtung A nebeneinander angeordnete Abstreifringe 8, wobei die erste Baugruppe 9a in der ersten Seitenwand 5 im Packungsgehäuse 3 angeordnet und wobei die zweite Baugruppe 9b im Abstreifring 8 angeordnet, sodass durch die beiden Permanentmagnete 10a, 10b ein abstossende Federkraft F erzeugt wird, welche die Abstreifringe 8 in Richtung der Federkraft F an die Dichtfläche 12 anpresst. Die beiden Baugruppen 9a, 9b bilden die magnetische Federvorrichtung 9. In diesem Ausführungsbeispiel besteht zumindest derjenige Abstreifring 8, in welchem die zweite Baugruppe 9b angeordnet ist, aus einem nicht ferromagnetischen Material. Zudem besteht die erste Seitenwand 5 aus einem nicht ferromagnetischen Material. Die nicht im Detail dargestellten Abstreifringe 8 sind von einer Schlauchfeder 8b umschlossen.

Die in Figur 2 dargestellte Dichtungsanordnung 1 umfasst zwei in axialer Richtung A nebeneinander angeordnete Dichtringe 7, und umfasst zudem zwei in axialer Richtung A nebeneinander angeordnete Baugruppen 9a, 9b, wobei jede Baugruppe 9a, 9b ein ringförmiger Magnetträger 11a, 11b und ein darin angeordnetes Permanentmagnet 10a, 10b umfasst. Die erste Baugruppe 9a liegt an der ersten Seitenwand 5 im Packungsgehäuse 3 an, wogegen die zweite Baugruppe 9b am einen Dichtungsring 7 anliegt, sodass die zweite Baugruppe 9b eine Federkraft F auf die Dichtungsringe 7 ausübt, welche den Dichtring 7 in Richtung der Federkraft F an die Dichtfläche 12 anpresst. Die ringförmigen Magnetträger 11a, 11b bestehen aus einem nicht ferromagnetischen Material. Figur 7 zeigt eine Draufsicht auf die in Figur 2 dargestellte zweite Baugruppe mit ringförmigem Magnetträger 11b und Permanentmagnet 10b. Die nicht im Detail dargestellten Dichtringe 7 sind von einer Schlauchfeder 7b umschlossen.

Die in Figur 3 dargestellte Dichtungsanordnung 1 umfasst zwei in axialer Richtung A nebeneinander angeordnete Dichtringe 7, und umfasst einen in axialer Richtung A beabstandet angeordnete erste Baugruppe 9a mit ringförmigem Magnetträger 11a und Permanentmagnet 10a. Die zweite Baugruppe 9b wird durch eine Kombination des Dichtrings 7 mit einem Permanentmagnet 10b ausgebildet. Die erste Baugruppe 9a liegt an der ersten Seitenwand 5 im Packungsgehäuse 3 an, wogegen die zweite Baugruppe 9b Teil des Dichtrings 7 bildet und an einen weiteren Dichtring 7 anliegt, sodass die zweite Baugruppe 9b eine Federkraft F auf die Dichtungsringe 7 ausübt, welche den Dichtring 7 in Richtung der Federkraft F an die Dichtfläche 12 anpresst. Die ringförmigen Magnetträger 11a und der Dichtring 7 umfassend die zweite Baugruppe 9b bestehen aus einem nicht ferromagnetischen Material.

Die in Figur 4 dargestellte Dichtungsanordnung 1 umfasst zwei in axialer Richtung A nebeneinander angeordnete Dichtringe 7, und umfasst eine Federvorrichtung 9 mit einer ersten Baugruppe 9a und einer zweiten Baugruppe 9b. Die erste Baugruppe 9a ist in der ersten Seitenwand 5 des Packungsgehäuses 3 angeordnet. Die zweite Baugruppe 9b wird durch eine Kombination des Dichtrings 7 mit einem Permanentmagnet 10b ausgebildet. Die zweite Baugruppe 9b übt eine Federkraft F auf die Dichtungsringe 7 aus, welche den rechts angeordneten Dichtring 7 in Richtung der Federkraft F an die Dichtfläche 12 anpresst. Das Packungsgehäuse 3 und der Dichtring 7 umfassend die zweite Baugruppe 9b bestehen aus einem nicht ferromagnetischen Material.

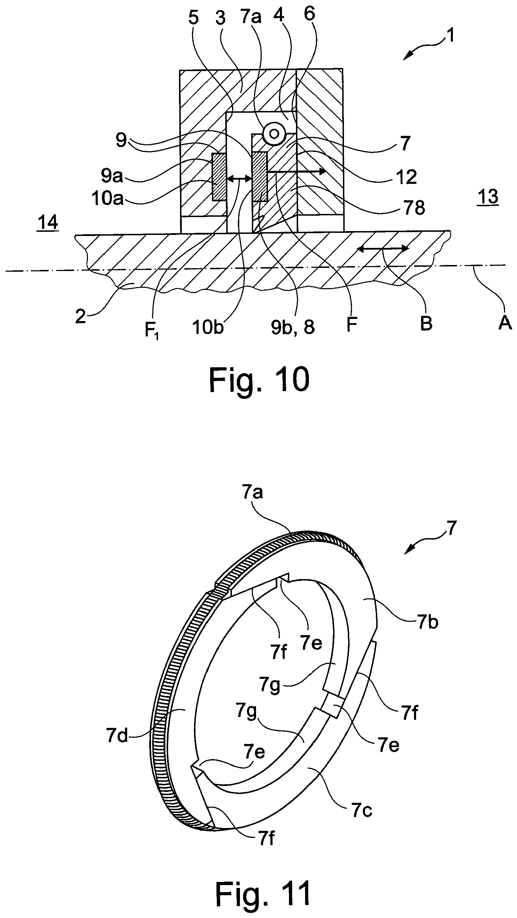

Die in Figur 10 dargestellte Dichtungsanordnung 1 umfasst einen einzigen Dichtring 7, und umfasst eine Federvorrichtung 9 mit einer ersten Baugruppe 9a und einer zweiten Baugruppe 9b. Die erste Baugruppe 9a ist in der ersten Seitenwand 5 des Packungsgehäuses 3 angeordnet. Die zweite Baugruppe 9b wird durch eine Kombination des Dichtrings 7 mit einem Permanentmagnet 10b ausgebildet. Die zweite Baugruppe 9b übt eine Federkraft F auf die Dichtungsringe 7 aus, welche den rechts angeordneten Dichtring 7 in Richtung der Federkraft F an die Dichtfläche 12 anpresst. Das Packungsgehäuse 3 und der Dichtring 7 umfassend die zweite Baugruppe 9b bestehen aus einem nicht ferromagnetischen Material.

Figur 11 zeigt beispielhaft einen Dichtring 7, der aus einem ersten, einem zweiten und einem dritten Segmentteil 7b, 7c, 7d besteht, und der von einer Schlauchfeder 7a umschlossen ist. Die drei Segmentteile 7b, 7c, 7d sind über Stossstellen 7f gegenseitig verschiebbar gelagert und weisen je eine Stossstelle 7e auf. Die Federkraft der Schlauchfeder 7a hat zur Folge, dass die Dichtflächen 7g zur Kolbenstange 2 hin eine Vorspannung aufweisen und zur Kolbenstange 2 hin gedrückt werden. Die in Figur 2 dargestellte Dichtungsanordnung 1 könnte beispielsweise je zwei Dichtringe 7 aufweisen, wie diese in Figur 11 dargestellt sind. Falls die durch die Federvorrichtung 9 bewirkte Federkraft F zu gross ist kann dies zur Folge haben, dass die Bewegung der Segmentteile 7b, 7c, 7d des Dichtrings 7 behindert oder verhindert wird, sodass der Dichtring 7 asymmetrisch oder gar nicht an der Kolbenstange 2 anliegt, was einen erhöhten Verschleiss, einen asymmetrischen Verschleiss oder eine erhöhte Undichtigkeit zur Folge hat. In Figur 2 weist die Federvorrichtung 9 einen gegenseitigen Abstand F1 auf. Figur 12 zeigt die Federkraft beim Abstand F1. Der nichtlineare Verlauf der Federkraft F weist den Vorteil auf, dass die Federkraft beim Abstand F1 relativ gering ist, sodass eine gegenseitige Bewegung der Segmentteile 7b, 7c, 7d des Dichtrings 7 nicht behindert wird. Sobald die Dichtringe 7 auf Grund der Bewegung B in axialer Richtung A verschoben werden hat dies zur Folge, dass der Abstand F1 verkleinert wird, was, wie aus Figur 12 ersichtlich, zur Folge hat, dass die auf die Dichtringe 7 wirkende Federkraft F überproportional ansteigt, sodass sich zwischen den beiden Dichtringen 7 oder zwischen dem Dichtring 7 und der zweiten Seitenwand 6 nur ein kleiner radialer Spalt ausbildet, und die beiden Dichtringe 7 auf Grund der erhöhten Federkraft F wieder in die in Figur 2 dargestellte Lage bewegt werden. Die erfindungsgemässe Dichtungsanordnung 1 weist deshalb den Vorteil auf, dass die Ausbildung oder zumindest die Breite der radialen Spalten zwischen den beiden Dichtringen 7 oder zwischen dem Dichtring 7 und der zweiten Seitenwand 6 reduziert wird, und dass die radiale Bewegung des Dichtrings 7 nicht oder nur geringfügig behindert wird.

Ein Dichtring 7 kann in einer Vielzahl von Möglichkeiten ausgestaltet sein, insbesondere auch einstückig. Auch ein Abstreifring 8 kann in einer Vielzahl von Möglichkeiten ausgestaltet sein, insbesondere segmentförmig oder auch einstückig.

Bei der in Figur 4 dargestellten Dichtungsanordnung 1 ist der Magnet 10a der ersten Baugruppe 9a als Elektromagnet und der Magnet 10b der zweiten Baugruppe 9b als Permanentmagnet ausgestaltet. In weiteren möglichen Ausführungsformen ist zumindest eines der Magnete 10a, 10b der ersten und zweiten Baugruppe 9a, 9a und vorzugsweise beide Magnete 10a, 10b als Elektromagnete ausgestaltet, sodass die Magnetwirkung durch einen im Elektromagneten fliessenden Strom erzeugt wird. In einer möglichen Ausgestaltung fliesst ein konstanter Strom durch den Elektromagnet, um dadurch eine entsprechende, konstante Magnetwirkung zu erzielen. In einer besonders vorteilhaften Ausgestaltung umfasst die Dichtungsanordnung 1 eine Regelungsvorrichtung 15 umfassend eine erste Steuerleitung 15a für die erste Baugruppe 9a und/oder umfassend eine zweite Steuerleitung 15b für die zweite Baugruppe 9b, sowie umfassend eine Leitung 15c für einen Sensor 15d. Mit dem Sensor 15d wird beispielsweise die Federkraft F gemessen oder beispielsweise der Abstand F1 zwischen der ersten und zweiten Baugruppe 9a, 9b gemessen oder eine sonstige Zustandsgrösse wie die Drehzahl des Kolbenkompressors oder der Hub der Kolbenstange 2. Die Elektromagnete 10a, 10b der ersten und/oder zweiten Baugruppe 9a, 9b werden vorteilhafterweise derart angesteuert, dass ein vorgegebener Sollwert eingehalten wird, z.B. ein Sollwert für die Federkraft F oder der Abstand F1 zwischen den beiden Baugruppen 9a, 9b. In einer vorteilhaften Ausgestaltung wird die Federkraft F drehzahlabhängig angesteuert, sodass mit einem zusätzlichen Sensor die Drehzahl oder beispielsweise die Bewegung der Kolbenstange 2 erfasst wird, und die von der Federvorrichtung 9 bewirkte Federkraft F in Abhängigkeit der Drehzahl angesteuert wird.

Ein Ausführungsbeispiel einer derartigen Regelung wird nachfolgend im Detail beschrieben. Bei der in Figur 4 dargestellten Dichtungsanordnung sei der Magnet 10a der ersten Baugruppe 9a als Elektromagnet und der Magnet 10b der zweiten Baugruppe 9b als Permanentmagnet ausgestaltet. Der Elektromagnet 10a wird durch die Regelungsvorrichtung 15 sowie die Ansteuerungsvorrichtung 15e über die Steuerleitung 15a mit Strom versorgt. Die Drehzahl des Kolbenkompressors wird mit einem Sensor 15d gemessen, und dessen Signal über die Leitung 15c der Regelungsvorrichtung 15 zugeführt. Der Strom im Elektromagnet 10a beziehungsweise das vom Elektromagnet 10a erzeugte Magnetfeld wird mit zunehmender Drehzahl erhöht, beziehungsweise mit abnehmender Drehzahl reduziert. Dadurch wird die Federcharakteristik der Federvorrichtung 9 verändert. Wie in Figur 12 dargestellt hat eine Erhöhung des Magnetfeldes des Elektromagneten 10a zur Folge, dass die Federcharakteristik F' nach oben verschoben wird, wogegen eine Reduzierung des Magnetfeldes zur Folge hat, dass die Federcharakteristik F" nach unten verschoben wird. Eine Erhöhung der Drehzahl des Kolbenkompressors hat zur Folge, dass die in axialer Richtung A auf die Dichtringe 7 wirkenden Kräfte erhöht werden. Um einem Verschieben der Dichtringe 7 in axialer Richtung A entgegenzuwirken wird die Federcharakteristik wie mit F' dargestellt angehoben, was zur Folge hat, dass die bei der Distanz F1 wirkende Federkraft vom Wert F10 zum Wert F11 angehoben wird. Mit abnehmender Drehzahl des Kolbenkompressors wird der Strom im Elektromagnet 10a reduziert, sodass die Federcharakteristik ab einer gewissen Drehzahl wieder den Verlauf F aufweist, und die Federkraft bei der Distanz F1 den Wert F10 aufweist.

Die in Figur 4 dargestellte Dichtungsanordnung 1 umfasst zumindest eine Packungskammer, und umfasst in der Packungskammer 4 in axialer Richtung A nacheinander folgend angeordnet eine magnetische Federvorrichtung 9 umfassend ein Elektromagnet 10a und zumindest ein Packungsring 78, wobei eine Zustandsgrösse des Kolbenkompressors gemessen wird und wobei der Elektromagnet 10a in Abhängigkeit der Zustandsgrösse angesteuert wird, um die von der magnetischen Federvorrichtung 9 auf den Packungsring 78 bewirkte Federkraft F in Abhängigkeit der Zustandsgrösse zu verändern.

Als Zustandsgrösse wird zum Beispiel die Drehzahl des Kolbenkompressors gemessen, wobei die Federkraft F mit zunehmender Drehzahl erhöht und mit abnehmender Drehzahl reduziert wird. Als Zustandsgrösse kann beispielswiese auch die Geschwindigkeit der Kolbenstange 2 gemessen werden.

Die Figuren 1 bis 4 und 10 zeigen jeweils eine Dichtungsanordnung 1 mit einer einzigen Kammerscheibe 3. Eine Dichtungsanordnung 1 kann jedoch auch derart ausgestaltet sein, dass diese eine Mehrzahl von in axialer Richtung A nacheinander folgend angeordneten Kammerscheiben 3 umfasst, wobei vorzugsweise in jeder Kammerscheibe 3 eine Federvorrichtung 9 sowie zumindest ein Packungsring 78 angeordnet ist.

## Patentansprüche

1. Dichtungsanordnung (1) zum Abdichten einer in axialer Richtung (A) verlaufenden und in axialer Richtung (A) hin und her beweglichen Kolbenstange (2) eines Kolbenkompressors, umfassend zumindest eine Packungskammer (4), wobei die Packungskammer (4) in axialer Richtung (A) von einer ersten und einer zweiten Seitenwand (5,6) begrenzt ist, wobei in der Packungskammer (4) zumindest ein als ein Dichtring (7) oder als ein Abstreifring (8) ausgestalteter Packungsring (78) sowie eine Federvorrichtung (9) angeordnet sind, und wobei ausgehend von der ersten Seitenwand (5) in axialer Richtung (A) nacheinander folgend eine Federvorrichtung (9) und zumindest ein Packungsring (78) angeordnet ist, wobei der Packungsring (78) an der zweiten Seitenwand (6) anliegt, **dadurch gekennzeichnet, dass** die Federvorrichtung (9) als Magnetfeder ausgestaltet ist und aus zwei in axialer Richtung (A) beabstandeten Baugruppen (9a, 9b), einer ersten Baugruppe (9a) und einer zweiten Baugruppe (9b) besteht, wobei jede Baugruppe (9a, 9b) zumindest ein Magnet (10a, 10b) umfasst, und wobei die Magnete (10a, 10b) derart gegenseitig angepasst in den beiden Baugruppen (9a, 9b) angeordnet sind, dass die beiden Baugruppen (9a, 9b) sich gegenseitig abstossen, und wobei die beiden Baugruppen (9a, 9b) nicht nur in axialer Richtung (A) gegenseitig verschiebbar sind, sondern auch eine gegenseitige Bewegung in radialer Richtung möglich ist.

2. Dichtungsanordnung nach Anspruch 1, **dadurch gekennzeichnet, dass** diese zumindest zwei in axialer Richtung (A) aneinander liegend angeordnete Packungsringe (78) umfasst.

3. Dichtungsanordnung nach Anspruch 1 oder 2, **dadurch gekennzeichnet**, die Magnete (10a, 10b) als Permanentmagnete ausgestaltet sind.

4. Dichtungsanordnung nach Anspruch 1 oder 2, **dadurch gekennzeichnet, dass** zumindest eines der Magnete (10a, 10b) als Elektromagnete ausgestaltet ist.

5. Dichtungsanordnung nach einem der Ansprüche 1 bis 4, **dadurch gekennzeichnet, dass** der Packungsring (78) zudem die zweite Baugruppe (9b) umfasst, indem ein Magnet (10b) im Packungsring (78) angeordnet ist, und dass der Packungsring (78) aus einem nicht ferromagnetischen Material besteht.

6. Dichtungsanordnung nach einem der Ansprüche 1 bis 5, **dadurch gekennzeichnet, dass** zumindest ein Magnet (10a) derart in der ersten Seitenwand (5) der Kammerscheibe (3) angeordnet ist, dass die Kammerscheibe (3) die erste Baugruppe (9a) umfasst, und dass die Kammerscheibe (3) aus einem nicht ferromagnetischen Material besteht.

7. Dichtungsanordnung nach einem der Ansprüche 1 bis 5, **dadurch gekennzeichnet, dass** die erste Baugruppe (9a) einen ringförmigen Magnetträger (11a) umfasst in welchem zumindest ein Magnet (10a) angeordnet ist, dass der ringförmige Magnetträger (11a) in der Packungskammer (4) angeordnet ist, dass der ringförmige Magnetträger (11a) an der ersten Seitenwand (5) anliegt, und dass der ringförmige Magnetträger (11a) aus einem nicht ferromagnetischen Material besteht.

8. Dichtungsanordnung nach einem der Ansprüche 6 oder 7, ausgenommen Anspruch 5, **dadurch gekennzeichnet, dass** die zweite Baugruppe (9b) einen ringförmigen Magnetträger (11b) umfasst in welchem zumindest ein Magnet (10b) angeordnet ist, dass der ringförmige Magnetträger (11b) in der Packungskammer (4) angeordnet ist, dass der ringförmige Magnetträger (11b) am Packungsring (78) anliegt, und dass der ringförmige Magnetträger (11b) aus einem nicht ferromagnetischen Material besteht.

9. Dichtungsanordnung nach einem der vorhergehenden Ansprüche mit Ausnahme von Anspruch 4, **dadurch gekennzeichnet, dass** der Magnet (10a, 10b) ein Permanentmagnet ist, und dass der Permanentmagnet (10a, 10b) in Umfangsrichtung (10c) aus einer Mehrzahl von in Umfangsrichtung (10c) nacheinander folgend angeordneten Teilpermanentmagneten (10d, 10e, 10f, 10g) besteht.

10. Dichtungsanordnung nach Anspruch 9, **dadurch gekennzeichnet, dass** die nacheinander folgend angeordneten Teilpermanentmagneten (10d, 10e, 10f, 10g) in entgegen gesetzter Richtung magnetisiert sind.

11. Dichtungsanordnung nach einem der Ansprüche 1 bis 8 mit Ausnahme von Anspruch 4, **dadurch gekennzeichnet, dass** die Magnete (10a, 10b) als Permanentmagnete ausgestaltet sind, dass jede Baugruppe (9a,9b) eine Mehrzahl von Permanentmagneten (10a, 10b) umfasst, dass die Permanentmagnete (10a, 10b) in Umfangsrichtung (10c) derart gegenseitig angepasst beabstandet angeordnet sind, dass die Permanentmagnete (10a, 10b) der ersten und der zweiten Baugruppe (9a,9a) in axialer Richtung (A) gegenüberliegend angeordnet sind, dass die Permanentmagnete (10a, 10b) in axialer Richtung (A) magnetisiert sind, und dass in axialer Richtung (A) gegenüberliegend angeordnete Permanentmagnete (10a, 10b) in entgegengesetzter Richtung magnetisiert sind.

12. Dichtungsanordnung nach Anspruch 4, umfassend eine Regelungsvorrichtung (15) sowie einen Sensor (15d) zum Erfassen einer Zustandsgrösse eines Kolbenkompressors, sowie umfassend eine Ansteuerungsvorrichtung (15e) zum Ansteuern des als Elektromagnet ausgestalteten Magneten (10a), um die Federkraft (F) der Federvorrichtung (9) in Abhängigkeit der gemessenen Zustandsgrösse zu verändern.

13. Verfahren zum Betrieb einer Dichtungsanordnung (1) zum Abdichten einer in axialer Richtung (A) verlaufenden und in axialer Richtung (A) hin und her beweglichen Kolbenstange (2) eines Kolbenkompressors, wobei die Dichtungsanordnung (1) zumindest eine Packungskammer (4) umfasst, und wobei in der Packungskammer (4) in axialer Richtung (A) nacheinander folgend eine magnetische Federvorrichtung (9) umfassend ein Elektromagnet und zumindest ein Packungsring (78) angeordnet sind, wobei die magnetische Federvorrichtung (9) eine in axialer Richtung (A) wirkende, gegenseitig abstossende Federkraft (F) erzeugt, wobei eine Zustandsgrösse des Kolbenkompressors gemessen wird und wobei der Elektromagnet in Abhängigkeit der Zustandsgrösse angesteuert wird, um die von der magnetischen Federvorrichtung (9) auf den Packungsring (78) bewirkte Federkraft (F) in Abhängigkeit der Zustandsgrösse zu verändern.

14. Verfahren nach Anspruch 13, **dadurch gekennzeichnet, dass** als Zustandsgrösse die Drehzahl des Kolbenkompressors gemessen wird, und dass die Federkraft (F) mit zunehmender Drehzahl erhöht und mit abnehmender Drehzahl reduziert wird.

15. Verfahren nach Anspruch 13, **dadurch gekennzeichnet, dass** als Zustandsgrösse die Geschwindigkeit der Kolbenstange (2) gemessen wird, und dass die Federkraft (F) mit zunehmender Geschwindigkeit erhöht und mit abnehmender Geschwindigkeit reduziert wird.

## Claims

1. A sealing assembly (1) for sealing a piston rod (2) of a piston compressor, which piston rod extends in an axial direction (A) and can be moved back and forth in the axial direction (A), said sealing assembly comprising at least one packing chamber (4) wherein the packing chamber (4) is bounded in the axial direction (A) by a first and a second side wall (5, 6), wherein at least one packing ring (78), configured as a sealing ring (7) or as a scraping ring (8), as well as a spring device (9) are arranged in the packing chamber (4), and wherein a spring device (9) and at least one packing ring (78) are arranged one after the other in the axial direction (A) proceeding from the first side wall (5), wherein the packing ring (78) lies against the second side wall (6), **characterized in that** the spring device (9) is configured as a magnetic spring and consists of two assemblies (9a, 9b) spaced apart in the axial direction (A), a first assembly (9a) and a second assembly (b), wherein each assembly (9a, 9b) comprises at least one magnet (10a, 10b), and wherein the magnets (10a, 10b) are arranged in the two assemblies (9a, 9b) in a mutually matched manner in such a way that the two assemblies (9a, 9b) repel each other and wherein the two assemblies (9a, 9b) are not only mutually displaceable in the axial direction (A), but also mutually moveable in the radial direction.

2. The sealing assembly as claimed in claim 1, **characterized in that** it comprises at least two packing rings (78) arranged adjoining one another in the axial direction (A).

3. The sealing assembly as claimed in claim 1 or 2, **characterized in that** the magnets (10a, 10b) are configured as permanent magnets.

4. The sealing assembly as claimed in claim 1 or 2 **characterized in that** at least one of the magnets (10a, 10b) is configured as an electromagnet.

5. The sealing assembly as claimed in one of claims 1 to 4, **characterized in that** the packing ring (78) furthermore comprises the second assembly (9b), with a magnet (10b) being arranged in the packing ring (78), and that the packing ring (78) is made from a non-ferromagnetic material.

6. The sealing assembly as claimed in one of claims 1 to 5, **characterized in that** at least one magnet (10a) is arranged in the first side wall (5) of the chamber disc (3) in such a way that the chamber disc (3) encloses the first assembly (9a), and that the chamber disc (3) consists of a non-ferromagnetic material.

7. The sealing assembly as claimed in one of claims 1 to 5, **characterized in that** the first assembly (9a) encloses a ring-shaped magnet carrier (11a) in which at least one magnet (10a) is arranged, that the ring-shaped magnet carrier (11a) is arranged in the packing chamber (4), that the ring-shaped magnet carrier (11a) is in contact with a first side wall (5), and that the ring-shaped magnet carrier (11a) consists of a non-ferromagnetic material.

8. The sealing assembly as claimed in one of claims 6 or 7, excluding claim 5, **characterized in that** the second assembly (9b) encloses a ring-shaped magnet carrier (11b) in which at least one magnet (10b) is arranged, that the ring-shaped magnet carrier (11b) is arranged in the packing chamber (4), that the ring-shaped magnet carrier (11b) is in contact with the packing ring (78), and that the ring-shaped magnet carrier (11b) consists of a non-ferromagnetic material.

9. The sealing assembly as claimed in one of the preceding claims with the exception of claim 4, **characterized in that** the magnet (10a, 10b) is a permanent magnet, and that the permanent magnet (10a, 10b) consists in the circumferential direction (10c) of a plurality of permanent magnet parts (10d, 10e, 10f, 10g) arranged one after the other in the circumferential direction (10c) .

10. The sealing assembly as claimed in claim 9, **characterized in that** the permanent magnet parts (10d, 10e, 10f, 10g) which are arranged one after the other are magnetized in the opposite direction.

11. The sealing assembly as claimed in one of claims 1 to 8 with the exception of claim 4, **characterized in that** the magnets (10a, 10b) are configured as permanent magnets, that each assembly (9a, 9b) comprises a plurality of permanent magnets (10a, 10b), that the permanent magnets (10a, 10b) are arranged spaced apart in the circumferential direction (10c) in a mutually matched manner in such a way that the permanent magnets (10a, 10b) of the first and the second assembly (9a, 9b) are arranged opposite one another in the axial direction (A), that the permanent magnets (10a, 10b) are magnetized in the axial direction (A), and that permanent magnets (10a, 10b) arranged opposite one another in the axial direction (A) are magnetized in the opposite direction.

12. The sealing assembly as claimed in claim 4, comprising a regulating device (15) as well as a sensor (15d) for detecting a state variable of a piston compressor, as well as comprising a control device (15e) for controlling the magnet (10a) which is configured as an electromagnet, in order to change the spring force (F) of the spring device (9) in dependence on the measured state variable.

13. A method for the operation of a sealing assembly (1) for sealing a piston rod (2) of a piston compressor, which piston rod extends in the axial direction (A) and can be moved back and forth in the axial direction (A), wherein the sealing assembly (1) comprises at least one packing chamber (4), and wherein a magnetic spring device (9) comprising an electromagnet and at least one packing ring (78) are arranged in the packing chamber (4) one after the other in the axial direction (A), wherein the magnetic spring device (9) generates a mutually repelling spring force (F) acting in the axial direction (A), wherein a state variable of the piston compressor is measured and wherein the electromagnet is controlled in dependence on the state variable, in order to change in dependence on the state variable the spring force (F) which is applied by the magnetic spring device (9) on the packing ring (78).

14. The method as claimed in claim 13, **characterized in that** the rotational speed of the piston compressor is measured as the state variable, and that the spring force (F) is raised as the speed increases and is reduced as the speed decreases.

15. The method as claimed in claim 13, **characterized in that** the speed of the piston rod (2) is measured as the state variable, and the spring force (F) is raised as the speed increases and is reduced as the speed decrease.

## Revendications

1. Ensemble d'étanchéité (1) servant à assurer l'étanchéité d'une tige de piston (2) de compresseur à piston s'étendant dans la direction axiale (A) et se déplaçant en va-et-vient dans la direction axiale (A),
l'ensemble comprenant au moins une chambre d'empilement (4),
la chambre d'empilement (4) étant délimitée dans la direction axiale (A) par une première et une deuxième paroi latérale (5, 6),
au moins une bague d'empilement (78) configurée comme bague d'étanchéité (7) ou comme bague de raclage (8) ainsi qu'un ensemble élastique (9) étant disposés dans la chambre d'empilement (4),
un ensemble élastique (9) et au moins une bague d'empilement (78) étant disposés à la suite l'un de l'autre dans la direction axiale (A) partant de la première paroi latérale (5),
la bague de raclage (8) reposant contre la deuxième paroi latérale (6),
**caractérisé en ce que**
l'ensemble élastique (9) est configuré comme ressort magnétique et est constitué de deux modules (9a, 9b) disposés à distance l'un de l'autre dans la direction axiale (A), à savoir un premier module (9a) et un deuxième module (9b),
**en ce que** chaque module (9a, 9b) comporte au moins un aimant (10a, 10b),
**en ce que** les aimants (10a, 10b) sont disposés de manière mutuellement adaptée dans les deux modules (9a, 9b) de telle sorte que les deux modules (9a, 9b) se viennent buter l'un contre l'autre et
**en ce que** non seulement les deux modules (9a, 9b) peuvent se déplacer l'un par rapport à l'autre dans la direction axiale (A) mais qu'ils puissent également se déplacer l'un par rapport à l'autre dans la direction radiale.

2. Ensemble d'étanchéité selon la revendication 1, **caractérisé en ce qu'**il comporte au moins deux bagues d'empilement (78) disposés l'un contre l'autre dans la direction axiale (A).

3. Ensemble d'étanchéité selon les revendications 1 ou 2, **caractérisé en ce que** les aimants (10a, 10b) sont configurés sous la forme d'aimants permanents.

4. Ensemble d'étanchéité selon les revendications 1 ou 2, **caractérisé en ce qu'**au moins l'un des aimants (10a, 10b) est configuré comme électro-aimant.

5. Ensemble d'étanchéité selon l'une des revendications 1 à 4, **caractérisé en ce que** la bague d'empilement (78) comporte en outre le deuxième module (9b) par le fait qu'un aimant (10b) est disposé dans la bague d'empilement (78) et **en ce que** la bague d'empilement (78) est constituée d'un matériau non ferromagnétique.

6. Ensemble d'étanchéité selon l'une des revendications 1 à 5, **caractérisé en ce qu'**au moins un aimant (10a) est disposé dans la première paroi latérale (5) de la plaque (3) de chambre de telle sorte que la plaque (3) de chambre comporte le premier module (9a) et **en ce que** la plaque (3) de chambre est constituée d'un matériau non ferromagnétique.

7. Ensemble d'étanchéité selon l'une des revendications 1 à 5, **caractérisé en ce que** le premier module (9a) comporte un support (11a) d'aimant de forme annulaire dans lequel au moins un aimant (10a) est disposé, **en ce que** le support (11a) d'aimant de forme annulaire est disposé dans la chambre d'empilement (4), **en ce que** le support (11a) d'aimant repose contre la première paroi latérale (5) et **en ce que** le support (11a) d'aimant est constitué d'un matériau non ferromagnétique.

8. Ensemble d'étanchéité selon l'une des revendications 6 ou 7 à l'exception de la revendication 5, **caractérisé en ce que** le deuxième module (9b) comporte un support (11b) d'aimant de forme annulaire dans lequel au moins un aimant (10b) est disposé, **en ce que** le support (11b) d'aimant de forme annulaire est disposé dans la chambre d'empilement (4), **en ce que** le support (11b) d'aimant repose contre la première paroi latérale (5) et **en ce que** le support (11b) d'aimant est constitué d'un matériau non ferromagnétique.

9. Ensemble d'étanchéité selon l'une des revendications précédentes à l'exception de la revendication 4, **caractérisé en ce que** l'aimant (10a, 10b) est un aimant permanent et **en ce que** l'aimant (10a, 10b) est constitué dans la direction périphérique (10c) de plusieurs aimants permanents partiels (10d, 10e, 10f, 10g) disposés à la suite l'un de l'autre dans la direction périphérique (10c).

10. Ensemble d'étanchéité selon la revendication 9, **caractérisé en ce que** les aimants permanents partiels (10d, 10e, 10f, 10g) disposés à la suite l'un de l'autre sont magnétisés dans des directions mutuellement opposées.

11. Ensemble d'étanchéité selon l'une des revendications 1 à 8 à l'exception de la revendication 4, **caractérisé en ce que** les aimants (10a, 10b) sont configurés comme aimants permanents, **en ce que** chaque module (9a, 9b) comporte plusieurs aimants permanents (10a, 10b), **en ce que** les aimants permanents (10a, 10b) sont disposés à distance mutuelle dans la direction périphérique (10c) de manière mutuellement adaptée, **en ce que** les aimants permanents (10a, 10b) du premier et du deuxième module (9a, 9b) sont disposés l'un en face de l'autre dans la direction axiale (A), **en ce que** les aimants permanents (10a, 10b) sont magnétisés dans la direction axiale (A) et **en ce que** des aimants permanents (10a, 10b) disposés l'un en face de l'autre dans la direction axiale (A) sont magnétisés dans des directions mutuellement opposées.

12. Ensemble d'étanchéité selon la revendication 4, comprenant un ensemble de régulation (15) ainsi qu'un capteur (15d) qui saisit une grandeur d'état d'un compresseur à piston, et comprenant également un ensemble de commande (15e) qui commande l'aimant (10a) configuré comme électro-aimant pour modifier la force élastique (F) de l'ensemble élastique (9) en fonction de la grandeur d'état qui a été saisie.

13. Procédé de conduite d'un ensemble d'étanchéité (1) servant à assurer l'étanchéité d'une tige de piston (2) de compresseur à piston s'étendant dans la direction axiale (A) et se déplaçant en va-et-vient dans la direction axiale (A),
l'ensemble d'étanchéité (1) comprenant au moins une chambre d'empilement (4),
au moins une bague d'empilement (78) et un ensemble de ressort magnétique (9) comprenant un électro-aimant étant disposés l'une à la suite de l'autre dans la direction axiale (A),
l'ensemble de ressort magnétique (9) exerçant une force élastique (F) de poussée mutuelle dans la direction axiale (A),
une grandeur d'état du compresseur à piston étant mesurée et l'électro-aimant étant commandé en fonction de la grandeur d'état pour modifier en fonction de la grandeur d'état la force élastique (F) exercée par l'ensemble de ressort magnétique (9) sur la bague d'empilement (78).

14. Procédé selon la revendication 13, **caractérisé en ce que** la grandeur d'état mesurée est la vitesse de rotation du compresseur à piston et **en ce que** la force élastique (F) est augmentée lorsque la vitesse de rotation augmente et est diminuée lorsque la vitesse de rotation diminue.

15. Procédé selon la revendication 13, **caractérisé en ce que** la grandeur d'état mesurée est la vitesse de la tige de piston (2) et **en ce que** la force élastique (F) est augmentée lorsque la vitesse augmente et est diminuée lorsque la vitesse diminue.
